Europäisches Patentamt

European Patent Office

Office européen des brevets

(19)

(11) EP 0 451 802 B1

(12) EUROPEAN PATENT SPECIFICATION

(45) Date of publication and mention
of the grant of the patent:
20.03.1996 Bulletin 1996/12

(51) Int Cl.6: H05H 6/00, H05H 7/00

(21) Application number: 91105636.4

(22) Date of filing: 10.04.1991

(54) **Apparatus and method for the absolute determination of the energy of ion beam**

Einrichtung und Verfahren zur Absolutbestimmung der Energie eines Ionenstrahls

Dispositif et méthode pour la détermination absolue de l'énergie d'un faisceau d'ions

(84) Designated Contracting States:
AT BE CH DE DK FR GB LI LU NL SE

(30) Priority: 11.04.1990 IT 1998690

(43) Date of publication of application:
16.10.1991 Bulletin 1991/42

(73) Proprietor: CONSIGLIO NAZIONALE DELLE
RICERCHE
I-00195 Roma (IT)

(72) Inventors:
• Silari, Marco
20133 Milan (IT)
• Birattari, Claudio
20091 Bresso (prov. Milan) (IT)

(74) Representative: Gervasi, Gemma, Dr. et al
NOTARBARTOLO & GERVASI Srl
Viale Bianca Maria 33
I-20122 Milano (IT)

(56) References cited:
• NUCLEAR INSTRUMENTS & METHODS IN
PHYSICS RESEARCH vol. 211, no. 1, June 1983,
AMSTERDAM pages 213 - 214; GARIBALDI ET
AL.: 'HIGH SPEED ROTATING VACUUM SEAL'
• NUCLEAR INSTRUMENTS & METHODS IN
PHYSICS RESEARCH, SECTION A vol. A244,
no. 3, April 1986, AMSTERDAM pages 455 - 476;
HAMMER ET AL.: 'SCORPION, THE
STUTTGART SCATTERING FACILITY FOR
FAST POLARIZED NEUTRONS'
• NUCLEAR INSTRUMENTS AND METHODS. vol.
158, no. 1, 1979, AMSTERDAM NL pages 185 -
191; SIMON ET AL.: 'A HIGH PRESSURE GAS
TERGET SYSTEM FOR THE DETERMINATION
OF ABSOLUTE ELECTRON SCATTERING
CROSS SECTIONS'
• NUCLEAR INSTRUMENTS & METHODS IN
PHYSICS RESEARCH, SECTION B vol. 15, no.
1/6, April 1986, AMSTERDAM pages 508 - 511;
RUDOLPH ET AL.: 'PLASTIC FOILS AS
PRIMARY HYDROGEN STANDARDS FOR
NUCLEAR REACTION ANALYSIS'
• REVIEW OF SCIENTIFIC INSTRUMENTS. vol.
60, no. 10, October 1989, NEW YORK US pages
3171 - 3180; POLLARD ET AL.:
'TIME-RESOLVED MASS AND ENERGY
ANALYSIS BY POSITION-SENSITIVE TIME
-OF-FLIGHT DETECTION'
• INSTRUMENTS AND EXPERIMENTAL
TECHNIQUES. vol. 28, no. 3, 1985, NEW YORK
US pages 659 - 661; TANTSYREV ET AL.: 'ION
SOURCE FOR STUDYING ION DISTRIBUTION
WITH RESPECT TO INITIAL KINETIC ENERGY'
• INSTRUMENTS AND EXPERIMENTAL
TECHNIQUES. vol. 30, no. 1, 1987, NEW YORK
US pages 172 - 175; MEDYNSKII ET AL.:
'ION-KINETIC-ENERGY SPECTROMETER
BASEDON MKH-1311 MASS SPECTROMETER'

**Description**

1. <u>Field of the invention</u>

The present invention refers to an apparatus and to a method which allow to determine the kinetic energy of a ion beam, particularly of light weight ions, such as protons, deuterons, alpha particles, $^3$He ions, with an uncertainty lower than the energetic dispersion of the beam.

2. <u>Prior art</u>

The exact knowledge of the energy and of the energy dispersion of a particle beam, such as the ions extracted from a cyclotron, or particle accelerator, is of a great importance in a number of applications.

A typical case is represented, for instance, by the collection of nuclear data, which are of interest not only in the field of basic nuclear physics, but also in many fields of applied research, such as the production of highly pure radionuclides.

In fact cylotrons of low and medium energy are being produced commercially, which are intended mainly for use in applied research (biomedicin, materials science, ultimate analysis, ect.).

The information on the beam energy, which can be inferred from the accelerator parameters supplied by the producer, is insuficiently precise in certain cases, as the ones cited above, in which the cyclotron must be calibrated by a method apt to allow an absolute energy determination.

In fact, the uncertainty in the measurement must be lower than the energy dispersion of the beam.

It would, furthermore, be desirable to have a sufficiently simple calibration method so as to allow to easily carry out the periodical reproducibility tests on the cyclotron parameters.

A scattering chamber consisting of a fixed section and a mobile section pivotable with respect to the fixed one, the two sections being connected to each other and vacuum proof, is e.g. described in the article by Högberg and Nordén in "Nuclear Instruments and Methods" 90 (1970) 283-288. The fixed section of this scattering chamber is operatively connectable to a line of an incident particle beam and comprises a target consisting of a sheet of a few μm thickness suitable to scatter said particles. The mobile section comprises means for detecting charged particles and means for transducing the signals supplied by said detector means into electrical signals indicative of the energy possessed by particles scattered by said target for preselected angular positions of the mobile section with respect to the fixed one. The angle between the beam directions in the fixed and the mobile section is the scattering angle. The fixed section is joined to a plate provided with a graduated scale and the mobile section is fastenable to said plate by means which regulate its angular position with respect to the fixed section.

3. <u>Summary of the invention</u>

Purposes of the present invention are simple and reliable apparatus and method for the absolute determination of the energy of a ion beam.

Another purpose of the invention is an apparatus and a method which can be rapidly set up and which will allow to acquire the requested information in a few hours.

A further purpose of the invention is an apparatus and a method which will allow the calibration of beams emitted in particle and energy fields typical of presently available cyclotrons.

The physical process on which the proposed apparatus and method are based is known as "crossover technique".

This method utilizes the relativistic kinematics relationships which describe an elastic and anelastic scattering process of nuclear particles by a suitable target.

When a beam of charged particles of mass Mp and kinematic energy $E_i$ incides on a suitable target consisting of two (or more) nuclear species, the particles undergo a series of elastic and anelastic scattering processes competing with each other.

If two different nuclear species are present on the target, the particles scattered elastically by one of the target nuclei and anelastically by the other of target nuclei have in general energy which differs for a generic angle $\theta$.

However, a specific value of the scattering angle exists, called crossover angle ($\theta c$), in correspondence of which the particles scattered by the two processes have the same energy.

The determination of the $\theta c$ angle allows, through the process kinematics, keeping into account the relativistic corrections, to univocally estabilish the energy $E_i$ of the ion beam incident on the target.

Assuming that the particles of the incident beam are scattered elastically by a light weight nucleus of mass $M_1$, and anelastically by a heavy weight nucleus of mass $M_2$, and $E_x$ as the excitation energy, the relationship between the $\theta c$ angle and the kinetic energy T may be expressed by a fourth degree polynomial:

$$a_0 T^4 + a_1 T^3 + a_2 T^2 + a_3 T + a_4 = 0 \qquad\qquad (a)$$

where:

$$a_0 = 4 \sin^2\theta_c$$

$$a_1 = 8\,\xi \sin^2\theta_c$$

$$a_3 = 4\,[(\xi^2 - 2\eta)\,\sin^2\theta_c + k]$$

$$a_4 = k^2 + 4\eta\,(\eta - \kappa)$$

$$\xi = 2\,M_p - E_r\,; \qquad \eta = E_r M_p\,; \qquad \kappa = E_r^2 - P_r^2$$

$P_r$ is the moment transferred in correspondence with the crossover and is given by:

$$P_r^2 = \frac{E_x\,(M_2 - M_1 + E_x/2)\,[2M_1 M_2 + E_x\,(M_1 + M_2 + E_x/2)\,]}{(M_2 - M_1)^2} \qquad\qquad (b)$$

$E_x$ being the energy transferred at the crossover and given by

$$E_x = (M_1^2 + P_r^2)^{1/2} - M_1 = [(M_2 + E_x)^2 + P_r^2]^{1/2} - M_2 \qquad\qquad (c)$$

where the masses are expressed in energy units.

The fourth degree polynomial (a) has two actual resolutions: one gives the sought for $E_i$ value, the other the value $E_r$, which is constant with $\theta$.

The accuracy of the determination of the $E_i$ value is solely a function of the precision with which angle $\theta c$ is measured. In fact, the imprecision with which $M_p$, $M_1$, $M_2$, $E_x$ are known is pratically negligeable.

In view of the cited ends, an apparatus was developed for determining the kinetic energy $E_i$ of a ion beam, particularly of light weight ions, characterized by a vacuum scattering chamber and by elaboration means, said chamber consisting of a fixed section and of mobile one, pivotable with respect to the fixed one, the chambers been connected with each other and vacuum proof, wherein the fixed section is operatively connectable with a beam of incident particles and includes a target, consisting of a sheet, a few μm thick, of a suitable material consisting of atoms with light nuclei and atoms with heavy nuclei apt to elastically and anelastically scatter said particles, and wherein the mobile section on its turn comprises means for detecting charged particles and means for transducing the signals supplied by said detector means into electrical signals indicative of the energy possessed by the particles elastically and anelastically scattered by said target, for preselected angular positions of the mobile section with respect to the fixed one, said fixed section being joined to a plate having a preselected graduated scale, said mobile section being fastenable to said plate by micrometric regulation means which regulate its angular position with respect to the fixed section, said elaborating means being programmed for receiving data relating to preselected physical values of said particle beam and data relating to said preselected angular positions of said mobile section with respect to the fixed section and to the relative values of the energy possessed by the elastically scattered particles and of the energy possessed by the anelastically scattered particles by said target, to derive from these data the angular crossover position (crossover angle $\theta c$) in which the energy of the elastically scattered particle equals the one of the anelastically scattered ones, and, through preselected relativistic kinematics relations, the value of the kinetic energy $E_i$ possessed by the incident particles beam.

The method according to the invention is characterized in that it comprises the steps of:

- introducing an incident particle beam into a scattering evacuated chamber consisting of a fixed section comprising a target, consisting of a sheet, a few μm thick, of a suitable material consisting of molecules formed by atoms with light weight nuclei and with heavy nuclei, apt to elastically and anelastically scatter said particles, and of a mobile section pivotable with respect to said fixed section, and which can be connected to a plate joined with said fixed section, having a preselected graduated scale, by micrometric regulation means which regulate its angular position with respect to the fixed section, comprising means for detecting charged particles and means for transducing the signals supplied by said detector means into signals indicating the energy possessed by the particles elastically and anelastically scattered by said target,

- directing said particle beam into said scattering chamber to make it incident upon said target;

- detecting the values of the energy possessed by the particles elastically scattered and by the ones anelastically scattered by said target, for pre-established angular inclination positions of said mobile section with respect to the fixed section;

- feeding into programmed computers the data relating to preselected physical values of said particle beam and of the data relating to said preselected angular inclination positions and of said detected values of the energy possessed by the particle elastically scattered and by the ones anelastically scattered by said target;

- deriving from said data the angular crossover position (crossover angle θc), for which the energy of the elastically scattered particles equals the one of the anelastically scattered ones, and, through preselected relativistic kinematics relationships, the kinetic energy possessed by the incident particles beam.

## Detailed description of the invention

Characteristics and advantages of the invention will now be illustrated with reference to figures 1 to 6 enclosed, in which a preferred embodiment of the invention is represented as a non limitative example.

Fig. 1 is a schematic, partially in section, representation of an apparatus according to the invention;
Fig. 2 is a view in longitudinal section, in an enlarged scale, of a detail of the apparatus of Fig. 1;
Fig. 3 is a view in longitudinal section, in an enlarged scale, of another detail of the apparatus of Fig. 1;
Fig. 4 shows a flow chart of the determination method implemented by the apparatus of Fig. 1;
Fig. 5 shows a flow chart of a determination method auxiliary to the one of Fig. 4;
Fig. 6 shows a further flow chart of a determination method auxiliary to the one of Fig. 4.

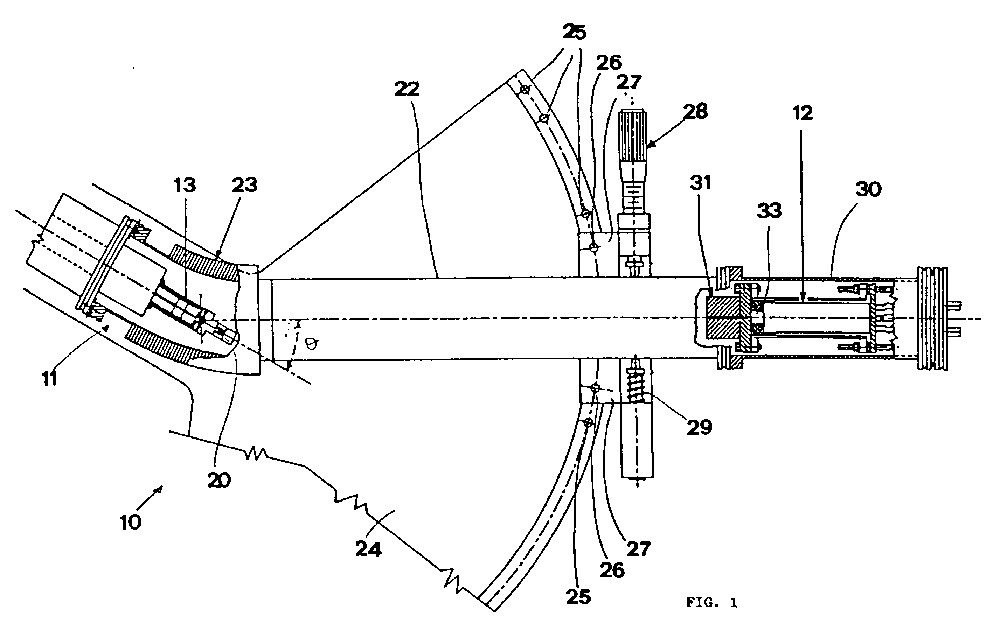

Fig. 1 shows in 10 a scattering vacuum chamber according to the invention the chamber consists of a fixed section, indicated as a whole with 11 and of a mobile section, pivotable with respect to the fixed one, indicated as a whole with 12.

Not shown is the ion beam line, particularly light weight ions, such as protons, deuterons, $^3$He ions, alpha particles coming from a cyclotron, also not shown, which is joined and coaxial with the fixed section 11.

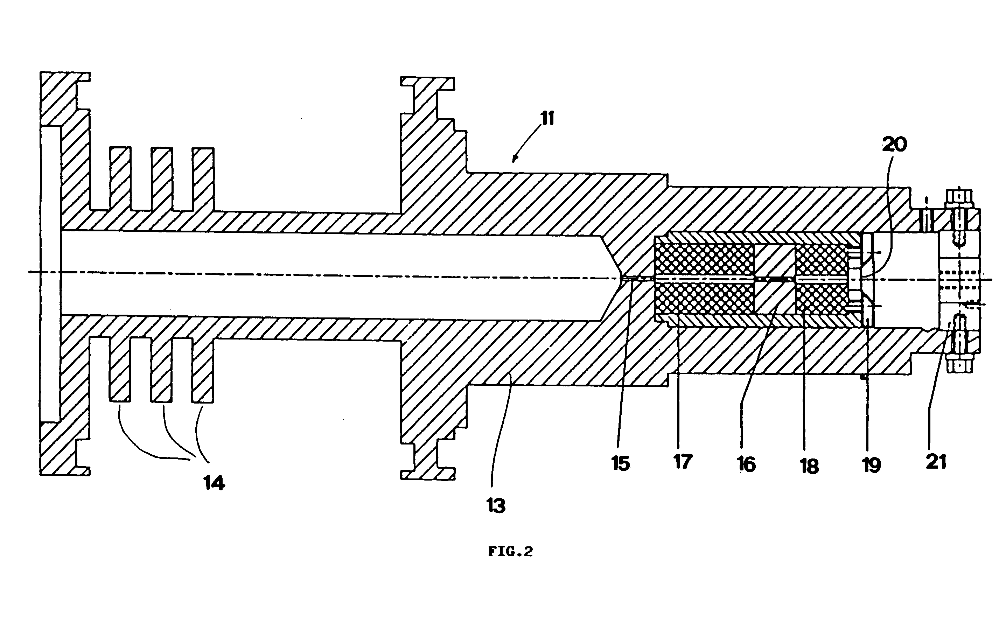

Section 11 shows, as can be seen from fig.2 an aluminum insertion 13, with fins 14, which allow its cooling with air; the insertion 13 contains a collimator 15 and 16, the size of which is a function of the precision required, and a lead shield, 17 and 18, for the radiations generated in the collimator by the interaction with the incident primary beam ions.

Insertion 13 also contains a support 19 for target 20, placing it at the rotation center of movable section 12, and a beam suppressor 21, which is electrically, but non thermally, insulated from the rest of the chamber, and which can be connected with a current gauge, not shown, to control the ion beam current incident on the target.

Target 20 consists of a very thin foil, of a few μm, of a suitable material, such as Mylar, made up of molecules containing hydrogen, carbon and oxygen, or polyethylene, consisting of hydrogen and carbon molecules, that is of light weight nuclei (hydrogen) and heavy nuclei (carbon).

The number 22 indicates a cylindrical arm of the mobile section 12, connected with fixed section 11 and insertion 13 by means of multilamellar, vacuum tight bellows, 23. Fixed section 11 is joined with a semicircular plate 24, provided with calibrated holes 25, with a 5 degree interaxis, to which correspond calibrated holes 26 on a plate 27 joined with cylindrical arm 22.

The angular excursion of arm 22 extends from -55° to +55° with respect to the 0° position and its rough positioning with respoect to plate 24 is made by means of plugs (not shown) inserted into calibrated holes 25 and 26.

The number 28 indicates a micrometria regulation device held by spring 29, which allows the precise positioning of arm 22, within the 5° interval existing between calibrated holes 25.

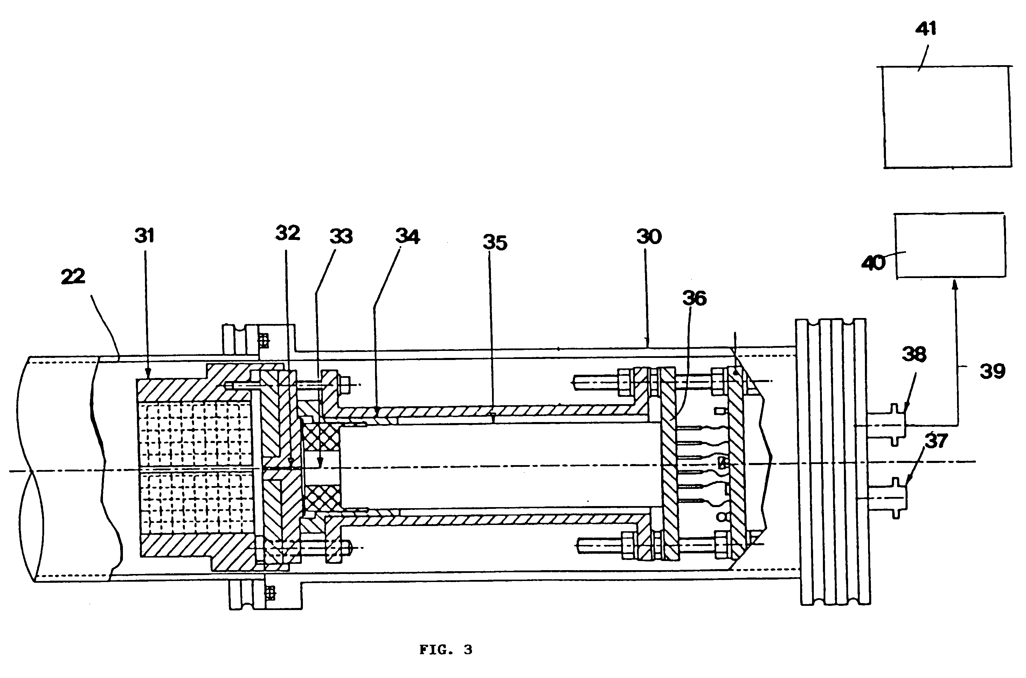

As shown in fig. 3, inside shell 30, connected by a flange to arm 22, are located a lead shield 31, an aluminum collimator 32, a charged particle detector 33, which is supported by a centering ring 34; in the particular case the detector 33 is of the scintillation type and is coupled with photomultiplier 35.

The number 36 indicates a voltage divider, connected to photomultiplier 35 and to the two vacuum connectors 37, 38, one for the electrical feeding and the other for the exit of signals emitted by detector 33.

Connector 38 may be operatively linked through line 39 to an acquisition system consisting of a pre-amplifier, an amplifier and a multichannel analyser (MCA) schematically represented by 40.

The data supplied by acquisition system 40 are elaborated by computer programs fed to a programmed computer, as the one indicated by 41, e.g. a personal computer, as it will be further described later.

The beam of light ions, such as protons, deuterons, 3He ions, alpha particles coming from a cyclotron, enters fixed section 11 inciding into target 20, from which they are scattered, elastically by the light weight hydrogen nuclei and anelastically by the heavy carbon nuclei; the energy possessed by the elestically and by the anelastically scattered ions is detected by detector 33, for selected angular positions of mobile section 12 with respect to fixed section 11, or scattering angles θ, e.g. some angles to the right and some to the left of position 0°, to correct the unavoidable system asymmetry, and is visualized by system analyser 40. Each operation for the acquisition of values takes from a few hundred to about 2000 seconds.

The barycentric E (θ) values of peaks in the spectra due to elastic and anelastic scatterings are detected with minimal errors, typically of one or two channels, which correspond to errors of a few tens of keV on the value of the incident beam energy $E_i$, which is of the order of tens of MeV.

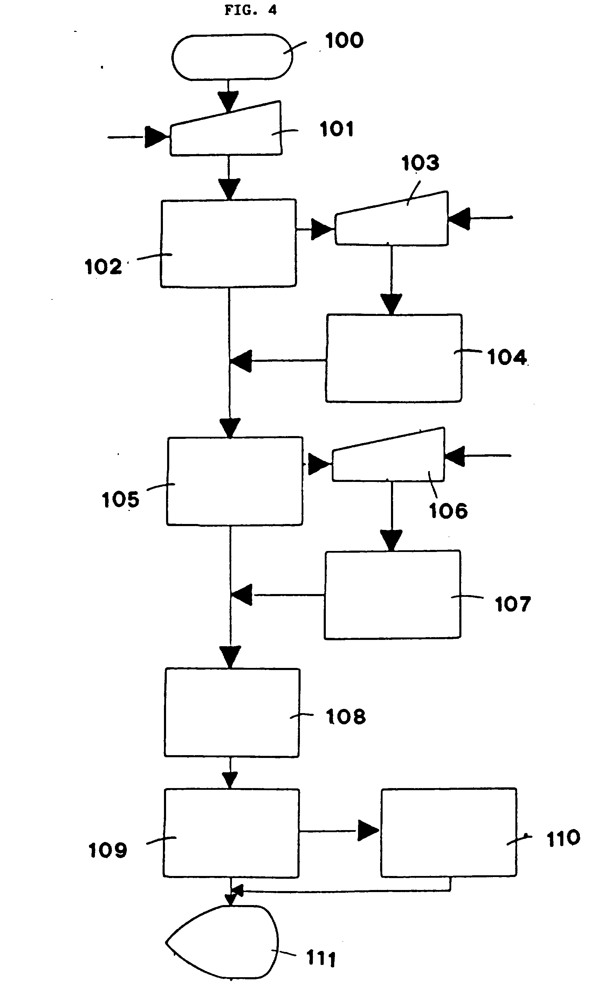

In programmed computer 41, which holds the program schematically shown by the flow chart of fig. 4, are introduced as input data: 1) the type of ion incident on the target, in order that the physical values of the incident beam, which are necessary for determining the solutions of the previously cited fourth degree polynomial may be defined; 2) the output data from the analyser of system 40, acquired for selected scattering angles, that is i) the same scattering angles or angular positions of mobile section 12 with respect to fixed section 11, to the left and to the right of zero; ii) the barycentric values of the peaks of energy E (θ) possessed by ions elastically scattered by hydrogen nuclei; iii) the barycentric values of the peaks of energy E (θ) possessed by ions anelastically scattered by carbon nuclei; 3) an initial evaluation of the ion beam energy, which can be for example its nominal energy.

In fig. 4, 100 schematizes the initialization; 101 schematizes the introduction of data 1) and 3) cited; 102 the process of detecting the scattering angles to the left of zero; 103 the operations of introduction of data 2) i) ii), respectively 2) i) iii) corresponding to said scattering angles to the left; 104 the operations of determining by interpolation the regression curves representing, as a function of scattering angles θ to the left, the course of the energy possessed by the elastically and anelastically scattered ions; 105 the operation of detecting scattering angles θ to the right of zero; 106 the introduction of data 2) i) ii) and 2) i) iii) corresponding to said scattering angles to the right; 107 the determination, by interpolationm of regression curves which represent, as a function of scattering angles to the right, the course of the energy possessed by the elastically and anelastically scattered ions; 108 the determination of crossover angles $\theta_c$ from regression curves obtained in 104 and in 107; 109 the determination of crossover angle $\theta_c$ as an average of the angles obtained in 108; 110 the determination of kinetic energy $E_i$ of the incident ion beam, through resolution of the fourth degree polynomial (a) reported supra; 111 the visualization of results obtained in 109 and 110.

Computer 41 may be fed also calculation programs auxiliary to the one schamatically shown in Fig. 4.

For instance, a program for determining the energy of ions scattered at a selected θ angle from target 20, starting from the incident beam energy, so as to allow to single out, through the analyser of system 40, the peaks of spectra relating to the elastic and anelastic scattering of interest.

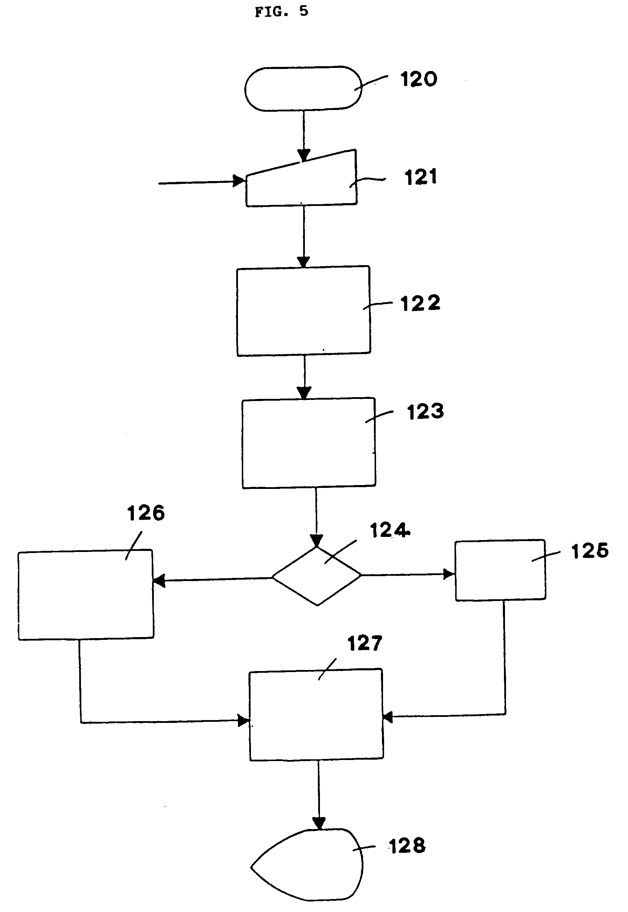

The flow chart of this program is represented in Fig. 5, in which 120 schematises the inizialization operation, 121 the introduction of data, that is type of ion, incident beam energy, scattering angle; 122 the selection of ion types; 123 the determination of the maximum scattering angle of light weight nuclei (hydrogen); 124 the operation for checking whether the introduced scattering angle is larger than the maximum one; in the affirmative, the scattering energy is made equal zero 125; in the negative, the energy possessed by the elastically scattered ions is determined 126, after having determined the threshold energy for the anelastic scattering, and having checked that the incident ion energy is larger than the threshold one; 127 schematizes the repeated operations for determining the energies of elastically and anelastically scattered ions; 128 the result visualization.

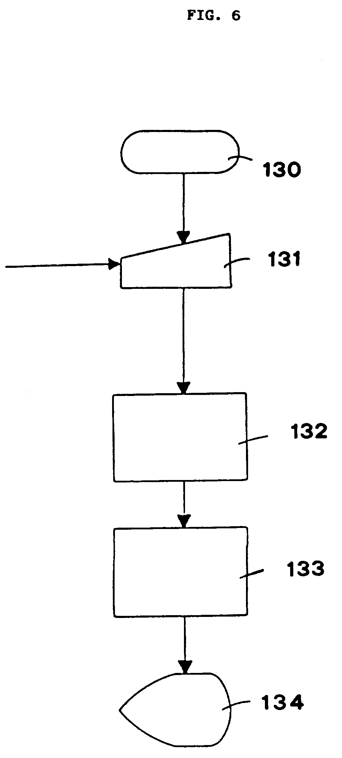

A further auxiliary calculation program, the flow chart of which is represented in Fig. 6, serves to determine the crossover $\theta_c$ angle; after inizialization 130, and introduction 131 of input data consisting of ion type, combination of target-nuclei and energy level of the heavy nucleus, and maximum energy of incident ion, the variables $E_r$ and $P_r$ are determined of which at equations b) and c), supra, 132 block, and from these the crossover angle $\theta_c$ 133 block, visualized in 134.

The suggested apparatus and method are particularly interesting because of the reliability and precision of the obtained results and the simplicity and relative rapidity of the operations required.

## Claims

1. Apparatus for determining the kinetic energy $E_i$ of a particle beam, such as ions, and particularly light weight ions, characterized by a vacuum scattering chamber (10) and computer means (41), said scattering chamber consisting of a fixed section (11) and a mobile section (12) pivotable with respect to the fixed one, the two sections being connected to each other and vacuum proof, wherein the fixed section is operatively connectable to a line of an incident particle beam and comprises a target (20), consisting of a sheet, of a few μm thickness, of a suitable material formed of molecules consisting of atoms with light weight nuclei, and atoms with heavy nuclei, suitable to elastically and anelastically scatter said particles, and wherein the mobile section comprises means (33) for detecting charged particles and means (35,36) for transducing the signals supplied by said detector means into electrical signals indicative of the energy possessed by particles elastically and anelastically scattered by said target for preselected angular positions of the mobile section with respect to the fixed one, said fixed section being joined to a plate (24) provided with a graduated scale, said mobile section being fastenable to said plate by micrometric registration means (28) which regulate its angular position with respect to the fixed section, said computer means (41) being programmed for receiving data relating to selected physical values of said particle beam and data relating to said selected angular positions of said mobile section with respect to the fixed one and to the relative values of the energy possessed by the elastically scattered particles and the energy possessed by the enelastically scattered ones from said target, to derive from said data the crossover angle ($\theta_c$) in which the energy possessed by the elastically scattered particles equals the one possessed by the anelastically scattered ones, and with the aid of selected relativistic kinematics relationships, the value of the kinetic energy $E_i$ possessed by the incident particles beam.

2. Apparatus according to claim 1, characterized in that said fixed section (11) also comprises collimation means (15, 16) for said particle beam, suitable shielding means (17, 19) capable of attenuating the backgroud radiation, supporting means (19), for said target (20) capable of placing it in the rotation centre of said mobile section (12), means for suppressing the beam (21), and said mobile section also comprising respective shielding means (31).

3. Apparatus according to claim 1, characterized in that said sections, fixed and mobile (11,12), are connected to each other through multilamellar, vacuum proof bellows (23).

4. Apparatus according to claim 1, characterized in that said computer means (41) are programmed to receive as imput data:

1) the type of particles incident on target (20) so that the physical values of the incident beam necessary for determining the solutions of said relativistic kinematics relationships may be defined; 2) the data acquired in said detection operations for the selected diffraction angles, that is i) the same scattering angles or angular positions of said mobile section (12) unit respect to said fixed section (11) on the right and on the left of the zero position; ii) the barycentric values of the peaks of energy $E(\theta)$ possessed by the particles elastically scattered by the light weight nuclei; iii) the barycentric values of the peaks of energy $E(\theta)$ possessed by the particles anelastically scattered by the heavy nuclei;
3) an initial evaluation of the value of the energy of the particle beam, which may be, for example, its nominal energy.

5. Apparatus according to claim 1, characterized in that said target (20) consists of a very thin sheet, a few μm thick, of a suitable material, such as Mylar, or polyethylene.

6. Apparatus according to claim 1, characterized in that said computer means (41) are programmed to obtain said kinetic energy value $E_i$ according to the following relationship:

$$a_0 T^4 + a_1 T^3 + a_2 T^2 + a_3 T + a_4 = 0$$

7. Method for determining the energy $E_i$ of a ion beam, and particularly of light weight ions, characterized by comprising the steps of:

- introducing an incident particle beam into a scattering evacuated chamber (10) consisting of a fixed section (11) comprising a target (20) consisting by a sheet a few μm thick of a suitable material constituted by molecules formed by atoms with light weight nuclei and atoms with heavy nuclei, suitable for the elastical and the anelastical scattering of said particles, and of a mobile section (12) pivotable with respect to said fixed section (11) and which can be joined to a plate (24) joined to said fixed section, provided with a selected graduated scale, with the aid of micrometric registration means (28) which regulate its angular position with respect to said fixed section, comprising means for detecting charged particles (33) and means (35,36) for transducing signals supplied by said detector means into signals indicative of the energy possessed by the particles elastically and anelastically scattered by said target,
- directing said particle beam into said scattering chamber to cause their incidence on said target,
- detecting the values of the energy possessed by the particles elastically and anelastically scattered by said target, for pre-established inclination angular positions of said mobile section with respect to the fixed section,
- feeding (101,103,106) into programmed computer means (41) data relative to physical values of said particles beam and data relative to said selected inclination angular positions and said detected values of the energy possessed by the particles elastically scattered and anelastically scattered by said target (20),
- deriving from said data (102, 104, 105, 107,108) the angular crossover angle $\theta_c$ for which the energy of the elastically scattered particles equals the one of the anelastically scattered particles, and, by means of said selected relativistic kinematics relationships (109, 110), the kinetic energy $E_i$ possessed by the incident particles beam.

8. Method according to claim 7, characterized in that said feeding of said programmed computer means (41) consist in introducing as imput data:

1) the type of particles incident or target (20), so as to make it possible to define the physical values of the incident beam, needed for determining the solutions of said relativistic kinematic relationships;

2) the data acquired in said detection operations for the selected scattering angles, that is i) the same scattering angles or angular positions of said mobile section (12) with respect to said fixed section (11), to the left and to the right of position zero; ii) the barycentric values of the peaks of energy E (θ) possessed by the particles elastically scattered by the light weight nuclei;

iii) the barycentric values of the peaks of energy E (θ) possessed by the particles anelastically scattered by the heavy nuclei; 3) an initial evaluation of the energy value of the particle beam, which may, for example, be its nominal value.

9. Method according to claim 7, characterized in that said operations are suitable for obtaining said $E_1$ kinetic energy value by the following equation:

$$a_0 T^4 + a_1 T^3 + a_2 T^2 + a_3 T + a_4 = 0$$

10. Method according to claims 7 to 9, characterized in that it comprises the steps of:

- inizializing (100) said computer means (41);
- introducing (101) said data 1) and 3);
- detecting (102) the scattering angles θ to the left of said zero position;
- introducing (103) data respectively 2) i) ii) and 2i) iii) corresponding to said scattering angles to the left;
- determining (104), by interpolation, the regression curves representing, as a function of the scattering angles to the left, the course of the energy possessed by the elastically and anelastically scattered particles;
- detecting (105) the scattering angles θ to the left of zero:
- introducing (106) data 2)i) ii) and 2)i)iii) corresponding to said scattering angles to the right;
- determining (107), by interpolation, of the regression curves representing, as a function of the scattering angles to the right, the course of the energy possessed by the elastically and anelastically scattered particles;
- determining (108) the crossover angles $\theta_c$ from the regression curves obtained through said operations (104,107);
- determining (109) the crossover angle $\theta_c$ as an average value of the angles obtained through operations (108);
- determining (110) the kinetic energy $E_i$ of the incident particle beam, through the solution of said selected relativistic kinematics relationships;
- visualizing (116) the results obtained by means of said 109,110 operations.

11. Method according to claim 10, characterized by further comprising the steps of:

- a further initializing operation (120)

- introducing (121) imput data, that is particle type, incident beam energy, scattering angle θ;

- selecting (122) a particle type;

- determining (123) the maximum scattering angle on light weight nuclei (hydrogen)

- cheching (124) whether the introduced scattering angle is larger than the maximum one, and in the affirmative make scattering energy equal zero (125), while in the negative, determine (126) the energy possessed by the elastically scattered particles, after having determined the threshold energy for the anelastic scattering and determined that the incident particle energy is larger than the threshold one;

- repeatedly determining (122) the energy of elastically and anelastically scattered particles;

- visualizing (128) the results obtained through said (127) operations.

12. Method according to claim 10, characterized by comprising also the steps of:

- a further initializing operation (130);
- introducing (131) imput data consisting of: particle type, combination target nuclei and energy level of heavy nuclei, maximum energy of incident particles;
- determining (132) variables $E_r$ and $P_r$ of which at the above b) and c) relationships;

- determining (133) crossover angle $\theta_c$ from the variables obtained through said (132) determination;
- visualizing the results (134).

**Patentansprüche**

1.  Gerät zum Bestimmen der kinetischen Energie $E_i$ eines Partikelstrahls mit Ionen, insbesondere mit leichten Ionen, gekennzeichnet durch

    - eine Vakuumdiffusionskammer (10) und einer Computervorrichtung (41), wobei

    - die Diffusionskammer aus einem festen Abschnitt (11) und einem beweglichen Abschnitt (12) besteht, der um den festen schwenkbar ist, und die beiden Abschnitte miteinander vakuumdicht verbunden sind,

    - der feste Abschnitt betriebsgemäß mit einer Zuleitung eines vorliegenden Partikelstroms verbindbar ist und ein Target (20) enthält, das aus einer einige µm dicken Lage eines geeigneten Materials besteht, das aus Molekülen bestehend aus Atomen mit leichten Kernen und Atomen mit schweren Kernen gebildet ist und sich zum elastischen und unelastischen Streuen der Partikel eignet, und

    - der mobile Abschnitt eine Vorrichtung (33) zum Detektieren geladener Partikel enthält sowie eine Vorrichtung (35, 36) zum Übertragen der durch die Detektorvorrichtung gebildeten Signale in elektrische Signale zum Anzeigen der Energie der elastisch und unelastisch durch das Target gestreuten Partikel für vorbestimmte Winkelpositionen des beweglichen Abschnitts im Hinblick auf den festen,

    - der feste Abschnitt an einer Platte (24) mit gestufter Skala befestigt ist,

    - der bewegliche Abschnitt an der Platte mit einer mikrometrischen Registriervorrichtung (28) befestigbar ist, die seine Winkelposition im Hinblick auf den festen Abschnitt bestimmt,

    - die Computervorrichtung (41) so programmiert ist, daß sie die Daten im Hinblick auf ausgewählte physikalische Werke des Partikelstrahls empfängt und Daten im Hinblick auf die ausgewählten Winkelpositionen des beweglichen Abschnitts, bezogen auf den festen, sowie im Zusammenhang mit dem relativen Wert der Energie der durch das Target elastisch gestreuten Partikel und der Energie der durch das Target unelastisch gestreuten, damit aus den Daten der Übergangswinkel (θc) bestimmt wird, bei dem die Energie der elastisch gestreuten Partikel gleich derjenigen der unelastisch gestreuten ist, und mit Hilfe ausgewählter relativistischer kinematischer Beziehungen den Wert der kinetischen Energie ($E_i$) des auftretenden Partikelstrahls.

2.  Gerät nach Anspruch 1, dadurch gekennzeichnet, daß der feste Abschnitt (11) auch eine Kollaminationsvorrichtung (15, 16) für den Partikelstrahl enthält, sowie eine geeignete Abschirmvorrichtung (17, 19) mit der sich die Hintergrundstrahlung dämpfen läßt, eine Haltevorrichtung (19) für das Target (20), mit dem sich eine Anordnung in dem Drehzentrum des beweglichen Abschnitts (12) erzielen läßt, eine Vorrichtung zum Unterdrücken des Strahls (21), und daß der bewegliche Abschnitt auch jeweils eine Abschirmvorrichtung (31) enthält.

3.  Gerät nach Anspruch 1, dadurch gekennzeichnet, daß der feste und bewegliche Abschnitt (11, 12) miteinander durch einen multilaminaren vakuumdichten Faltbalg (23) verbunden sind.

4.  Gerät nach Anspruch 1, dadurch gekennzeichnet, daß die Computervorrichtung (41) zum Empfangen folgender Eingangsdaten programmiert ist:

    1) die Art der am Target (20) vorliegenden Partikel, so daß die physikalischen Werte des vorliegenden Strahls, die für die Bestimmung der Lösung der relativistischen kinematischen Beziehung erforderlich sind, definiert werden können;

    2) die Daten, die bei dem Erfassungsbetrieb für die ausgewählten Ablenkungswinkel erfaßt werden, d.h. i) dieselben Streuwinkel für Winkelpositionen der beweglichen Abschnittseinheit (12) im Hinblick auf den festen Abschnitt (11) nach rechts und nach links bezogen auf die Null-Position; ii) die barizentrischen Werte der Spitzen der Energie E(θ) der elastisch durch die leichten Kerne gestreuten Partikel; iii) die barizentrischen Werte der Spitzen der Energie E(θ) der unelastisch durch die schweren Kerne gestreuten Partikel;

3) eine anfängliche Bestimmung des Energiewertes des Partikelstrahls, die beispielsweise dessen Nennenergie sein kann.

**5.** Gerät nach Anspruch 1, dadurch gekennzeichnet, daß das Target (20) aus einer dünnen, einige μm dicken Lage eines geeigneten Materials, beispielsweise Mylar oder Polyethylen besteht.

**6.** Gerät nach Anspruch 1, dadurch gekennzeichnet, daß die Computervorrichtung (41) so programmiert ist, daß sie den kinetischen Energiewert $E_i$ entsprechend der folgenden Beziehung bestimmt:

$$a_0 T^4 + a_1 T^3 + a_2 T^2 + a_3 T + a_4 = 0$$

**7.** Verfahren zum Bestimmen der Energie $E_i$ eines Ionenstrahls und insbesondere leichter Ionen, dadurch gekennzeichnet, daß es die folgenden Schritte enthält:

- Einleiten eines vorliegenden Partikelstrahls in eine Vakuumdiffusionskammer (10) bestehend aus einem festen Abschnitt (11) mit einem Target (20) aus einer einige μm dicken Lage bestehend aus einem geeigneten Material aus Molekülen, die durch Atome mit leichten Kernen und Atome mit schweren Kernen gebildet sind und sich für das elastische und unelastische Streuen der Partikel eignen und einen beweglichen Abschnitt (12), der im Hinblick auf den festen Abschnitt (11) schwenkbar ist und der an einer Platte (24) angebracht werden kann, die an den festen Abschnitt angebracht ist, die mit einer ausgewählten gestuften Skala versehen ist, unter Einsatz einer mikrometrischen Registriervorrichtung (28) zum Regulieren von dessen Winkelposition im Hinblick auf den festen Abschnitt, mit einer Vorrichtung zum Erfassen geladener Partikel (33) und einer Vorrichtung (35, 36) zum Übertragen der durch die Detektorvorrichtung zugeführten Signale in Signale zum Anzeigen der Energie der durch das Target elastisch und unelastisch gestreuten Partikel,

- Leiten des Partikelstrahls in die Diffusionskammer, damit diese an dem Target vorliegen, Erfassen Energiewerte der durch das Target elastisch und unelastisch gestreuten Partikel für vorbestimmte Ablenkungswinkelpositionen des mobilen Abschnitts im Hinblick auf den festen Abschnitt,

- Zuführen (101, 103, 106) von Daten zu der programmierten Computervorrichtung (41) im Hinblick auf physikalische Werte des Partikelstrahls und von Daten im Hinblick auf die ausgewählten Ablenkungswinkelpositionen und den erfaßten Werten der Energie der durch das Target (20) elastisch und unelastisch gestreuten Partikel,

- Bestimmen des Schrägen Übergangswinkels $\theta_c$ aus den Daten (102, 104, 105, 107, 108) bei dem die Energie der elastisch gestreuten Partikel gleich derjenigen unelastisch gestreuten Partikel ist und auf der Grundlage der ausgewählten relativistischen kinematischen Beziehungen (109, 110) der kinetischen Energie ($E_i$) des vorliegenden Partikelstrahls.

**8.** Verfahren nach Anspruch 7, dadurch gekennzeichnet, daß die Eingabe bei der programmierten Computervorrichtung (41) aus der Eingabe der folgenden Eingangsdaten besteht:

1) die Art der an dem Target (20) vorliegenden Partikel, so daß die physikalischen Werte des vorliegenden Strahls definiert werden können, die für die Lösung der relativistischen kinematischen Bedingungen erforderlich sind;

2) die bei dem Erfassungsbetrieb für ausgewählte Streuwinkel erfaßten Daten, d.h. i) dieselben Streuwinkel oder Winkelpositionen des beweglichen Abschnitts (12) im Hinblick auf den festen Abschnitt (11), nach links und nach rechts bezogen auf die Null-Position; ii) die barizentrischen Werte der Spitzen der Energie $E(\theta)$ der elastisch an den leichten Kernen gestreuten Partikel; iii) die barizentrischen Werte der Spitzen der Energie $E(\theta)$ der unelastisch an den schweren Kernen gestreuten Partikel;

3) eine anfängliche Bewertung der Energiewerte des Partikelstroms, die beispielsweise dessen Nominalwert sein kann.

**9.** Verfahren nach Anspruch 7, dadurch gekennzeichnet, daß sich der Betrieb zum Bestimmen des kinetischen Energiewertes $E_1$ anhand der folgenden Gleichung eignet:

$$a_0 T^4 + a_1 T^3 + a_2 T^2 + a_3 T + a_4 = 0$$

10. Verfahren nach einem der Ansprüche 7 bis 9, dadurch gekennzeichnet, daß es folgende Schritte enthält:

- Initialisierung (100) der Computervorrichtung (41);

- Eingabe (101) der Daten 1(3);

- Erfassen (102) der Streuwinkel $\theta$ nach links bezogen auf die Null-Position;

- Eingabe (103) jeweils der Daten 2 (i) ii) und 2i) iii) entsprechend den Streuwinkeln nach links;

- Bestimmung (104) durch Interpolation der Regressionskurven zum Darstellen als Funktion des Streuwinkels nach links des Verlaufs der Energie der elastisch und unelastisch gestreuten Partikel;

- Erfassen (105) der Streuwinkel $\theta$ nach links bezogen auf Null:

- Eingabe (106) der Daten 2 i) ii) und 2) i) iii) entsprechen dem Streuwinkel nach rechts;

- Bestimmen (107) durch Interpolation der Regressionskurven zum Darstellen als Funktion des Streuwinkels nach rechts des Verlaufs der Energie der elastisch und unelastisch gestreuten Partikel;

- Bestimmen (108) der Übergangswinkel $\theta_c$ aus den durch die Schritte (104, 107) erhaltenen Regressionskurven;

- Bestimmen (109) des Übergangswinkels $\theta_c$ als ein Durchschnittswert der durch die Schritte (108) erhaltenen Winkel;

- Bestimmen (110) der kinetischen Energie $E_i$ des vorliegenden Partikelstrahls zur Lösung der ausgewählten relativistischen kinematischen Bedingungen;

- Visualisierung (116) der durch die 109, 110-Schritte erhaltenen Ergebnisse.

11. Verfahren nach Anspruch 10, dadurch gekennzeichnet, daß es ferner folgende Schritte enthält:

- einen weiteren Initialisierungsschritt (120),

- die Eingabe (121) von Eingabedaten, d.h. den Partikeltyp, der Energie des vorliegenden Strahls, des Streu- winkels $\theta$;

- Auswahl (122) eines Partikeltyps;

- Bestimmen (123) des maximalen Streuwinkels bei leichten Kernen (Wasserstoff);

- Überprüfen (124), ob der eingegebene Streuwinkel größer als der maximale ist und bejahendenfalls Einstellen der Streuenergie auf Null (121) und im Fall des Verneinens Bestimmen (126) der Energie der elastisch gestreuten Partikel nach dem Bestimmen der Schwellwertenergie für das unelastische Streuen und der Feststellung, daß die Energie der vorliegenden Partikel größer als der Schwellwert ist;

- wiederholtes Bestimmen (122) der Energie elastisch und unelastisch gestreuter Partikel;

- Visualisierung (128) der durch die (127)-Schritte erhaltenen Ergebnisse.

12. Verfahren nach Anspruch 10, dadurch gekennzeichnet, daß es auch folgende Schritte enthält:

- einen weiteren initialisierten Schritt (130);

- Eingabe (131) von Eingabedaten bestehend aus:

- Partikeltyp, Kombination der Targetkerne und Energiepegel der schweren Kerne, Maximalenergie der vorliegenden Partikel;

- Bestimmen (132) der Variablen $E_r$ und $P_r$ anhand der obigen b) und c)-Beziehungen;

- Bestimmen (133) des Übergangswinkels des θc aus den durch die (132)-Bestimmung erhaltenen Variablen;

- Visualisierung des Ergebnisses (136).


**Revendications**

1. Appareil de détermination de l'énergie cinétique $E_i$ d'un faisceau de particules telles que des ions et en particulier des ions de faible masse, caractérisé par une chambre à vide de diffusion (10) et des moyens informatiques (41), ladite chambre de diffusion comprenant une section fixe (11) et une section mobile (12) susceptible de pivoter par rapport à la section fixe, les deux sections étant raccordées l'une à l'autre et étant étanches au vide, dans lequel la section fixe est susceptible d'être reliée fonctionnellement au trajet d'un faisceau incident de particules et comprend une cible (20) composée d'une feuille d'une épaisseur de quelques micromètres, d'un matériau adéquat, formée de molécules composées d'atomes présentant des noyaux de masse faible, et d'atomes présentant des noyaux de masse élevée, et adaptée à assurer la diffusion élastique et inélastique desdites particules, et dans lequel la section mobile comprend des moyens (33) pour la détection de particules chargées et des moyens (35, 36) pour réaliser la transduction des signaux fournis par lesdits moyens détecteurs en des signaux électriques représentatifs de l'énergie possédée par des particules diffusées élastiquement et inélastiquement par ladite cible, pour des positions angulaires présélectionnées de la section mobile par rapport à la section fixe, ladite section fixe étant reliée à une plaque (24) munie d'une échelle graduée, ladite section mobile étant susceptible d'être fixée à ladite plaque par des moyens de repérage micrométrique (28) permettant de régler sa position angulaire par rapport à la section fixe, lesdits moyens informatiques (41) étant programmés pour recevoir des données concernant des valeurs physiques choisies dudit faisceau de particules et des données concernant lesdites positions angulaires choisies de ladite section mobile par rapport à la section fixe, et les valeurs relatives de l'énergie possédée par les particules diffusées élastiquement et de l'énergie possédée par les particules diffusées inélastiquement par ladite cible, pour obtenir, à partir desdites données, l'angle de croisement ($\theta_c$) pour lequel l'énergie possédée par les particules diffusées élastiquement est égale à l'énergie possédée par les particules diffusées inélastiquement et pour obtenir, à l'aide de certaines équations cinématiques relativistes, la valeur de l'énergie cinétique $E_i$ possédée par le faisceau de particules incident.

2. Appareil selon la revendication 1, caractérisé en ce que ladite section fixe (11) comprend également des moyens de collimation (15, 16) pour ledit faisceau de particules, des moyens de blindage adéquats (17, 19) capables d'affaiblir le rayonnement de fond, des moyens de support (19) pour ladite cible (20) capables de situer la cible au centre de rotation de ladite section mobile (12), des moyens (21) de suppression de faisceau, ladite section mobile comprenant également des moyens respectifs de blindage (31).

3. Appareil selon la revendication 1, caractérisé en ce que lesdites sections fixes et mobiles (11, 12) sont reliées l'une à l'autre au moyen d'un soufflet multilame étanche au vide (23).

4. Appareil selon la revendication 1, caractérisé en ce que lesdits moyens informatiques (41) sont programmés pour recevoir en tant que données d'entrée:

   1) le type de particule incidente sur la cible (20) permettant de déterminer les valeurs physiques du faisceau incident nécessaires pour déterminer les solutions desdites équations cinématiques relativistes;
   2) les données acquises lors desdites opérations de détection pour les différents angles de diffraction choisis, c'est-à-dire:

      i) les mêmes angles de diffusion ou positions angulaires de ladite section mobile (12) par rapport à la section fixe (11), à droite et à gauche de zéro,
      ii) les valeurs barycentriques des valeurs des pics de l'énergie E (θ) possédée par les particules diffusées élastiquement par les noyaux de faible masse,
      iii) les valeurs barycentriques des valeurs des pics de l'énergie E (θ) possédée par les particules diffusées inélastiquement par les noyaux de masse élevée;

   3) une évaluation initiale de la valeur de l'énergie du faisceau de particules qui peut être, à titre d'exemple, son énergie nominale.

5. Appareil selon la revendication 1, caractérisé en ce que ladite cible (20) comprend une feuille très mince d'une épaisseur de quelques micromètres en un matériau adéquat tel que du Mylar ou du polyéthylène.

6. Appareil selon la revendication 1, caractérisé en ce que lesdits moyens informatiques (41) sont programmés pour obtenir ladite valeur d'énergie cinétique $E_i$ à partir de l'équation suivante:

$$a_0 T^4 + a_1 T^3 + a_2 T^2 + a_3 T + a_4 = 0$$

7. Procédé de détermination de l'énergie $E_i$ d'un faisceau d'ions, et en particulier d'ions de masse faible, caractérisé en ce qu'il comprend les étapes consistant :

- à introduire un faisceau de particules incident dans une chambre à vide de diffusion (10) comprenant une partie fixe (11) comprenant une cible (20) composée d'une feuille d'une épaisseur de quelques micromètres en un matériau adéquat, constituée par des molécules formées d'atomes présentant des noyaux de masse faible et d'atomes présentant des noyaux de masse élevée adéquats pour obtenir une diffusion élastique et inélastique desdites particules, et une section mobile (12) susceptible de pivoter par rapport à la section fixe (11) et qui peut être reliée à une plaque (24) reliée à ladite section fixe, munie d'une échelle graduée sélectionnée, à l'aide de moyens de repérage micrométriques (28) destinés à régler sa position angulaire par rapport à ladite section fixe, comprenant des moyens de détection de particules chargées (33) et des moyens (35, 36) pour réaliser la transduction de signaux fournis par lesdits moyens de détection en des signaux représentatifs de l'énergie possédée par les particules diffusées élastiquement et inélastiquement par ladite cible ;
- à diriger ledit faisceau de particules à l'intérieur de ladite chambre de diffusion afin d'assurer l'incidence des particules sur ladite cible ;
- à détecter les valeurs de l'énergie possédée par les particules diffusées élastiquement et inélastiquement par ladite cible pour des positions angulaires d'inclinaison préétablies de ladite section mobile par rapport à ladite section fixe;
- à fournir (101, 103, 106) à des moyens informatiques programmés (41) des données concernant les valeurs physiques dudit faisceau de particules ainsi que des données concernant lesdites positions angulaires d'inclinaison choisies et lesdites valeurs détectées de l'énergie possédée par les particules diffusées élastiquement et inélastiquement par ladite cible (20) ;
- à obtenir à partir desdites données (102, 104, 107, 108), l'angle de croisement angulaire $\theta_c$ pour lequel l'énergie des particules diffusées élastiquement est égale à l'énergie des particules diffusées inélastiquement et, déterminer au moyen d'équations cinématiques relativistes choisies (109, 110) l'énergie cinétique $E_i$ possédée par le faisceau de particules incident.

8. Procédé selon la revendication 7, caractérisé en ce que l'étape consistant à fournir auxdits moyens informatiques programmés (41) des données consiste à introduire en tant que données d'entrée:

1) le type de particules incident sur la cible (20), permettant de définir les valeurs physiques du faisceau incident nécessaires pour déterminer les solutions desdites équations cinématiques relativistes ;
2) les données acquises lors desdites opérations de détection pour les angles de diffusion choisis, c'est-à-dire:

i) les mêmes angles de diffusion, ou les mêmes positions angulaires de ladite section mobile (12) par rapport à ladite section fixe (11) à gauche et à droite de la position zéro,
ii) les valeurs barycentriques des pics d'énergie $E(\theta)$ possédée par les particules diffusées élastiquement par les noyaux de masse faible,
iii) les valeurs barycentriques des crêtes d'énergie $E(\theta)$ possédée par les particules diffusées inélastiquement par les noyaux de masse élevée;

3) une évaluation initiale d'énergie du faisceau de particules qui peut, à titre d'exemple, être sa valeur nominale.

9. Procédé selon la revendication 7, caractérisé en ce que lesdites opérations permettent d'obtenir ladite valeur d'énergie cinétique $E_i$ au moyen de l'équation suivante:

$$a_0 T^4 + a_1 T^3 + a_2 T^2 + a_3 T + a_4 = 0$$

10. Procédé selon les revendications 7 à 9, caractérisé en ce qu'il comprend les étapes consistant :

- à initialiser (100) lesdits moyens informatiques (41) ;
- à introduire (101) lesdites données 1) et 3) ;
- à détecter (102) les angles de diffusion θ à gauche de ladite position de zéro ;
- à introduire (102) lesdites données respectivement 2) i) ii) et 2) i) iii) correspondant auxdits angles de diffusion vers la gauche ;
- à déterminer (104), par interpolation, les courbes de régression représentant, en fonction des angles de diffusion vers la gauche, l'allure de l'énergie possédée par les particules diffusées élastiquement et inélastiquement ;
- à détecter (105), les angles de diffusion θ à gauche de zéro ;
- à introduire (106) des données 2) i) ii) et 2) i) iii) correspondant auxdits angles de diffusion vers la droite ;
- à déterminer (107), par interpolation, les courbes de régression représentant, en fonction des angles de diffusion vers la droite, l'allure de l'énergie possédée par les particules diffusées élastiquement et inélastiquement ;
- à déterminer (108) les angles de croisement $\theta_c$ à partir des courbes de régression obtenues par lesdites opérations (104, 107) ;
- à déterminer (109) l'angle de croisement $\theta_c$ en tant que valeur moyenne des angles obtenus par les opérations (108) ;
- à déterminer (110) l'énergie cinétique $E_i$ du faisceau de particules incident grâce à la solution desdites équations cinématiques relativistes choisies ;
- à visualiser (116) les résultats obtenus au moyen desdites opérations (109, 110).

**11.** Procédé selon la revendication 10, caractérisé en ce qu'il comprend en outre les étapes consistant :

- à réaliser une opération d'initialisation supplémentaire (120) ;
- à introduire (121) des données d'entrée, c'est-à-dire le type de particules, l'énergie du faisceau incident et l'angle de diffusion θ ;
- à sélectionner (122) un type de particule ;
- à déterminer (123) l'angle de diffusion maximal pour des noyaux de masse faible (hydrogène) ;
- à vérifier (124) si l'angle de diffusion introduit est supérieur à l'angle maximal et, en cas d'une réponse positive, à mettre la valeur de l'énergie de diffusion à zéro (125) et, dans le cas d'une réponse négative, à déterminer (126) l'énergie possédée par les particules diffusées élastiquement après avoir déterminé la valeur de seuil pour la diffusion inélastique et vérifié que l'énergie des particules incidente est supérieure à l'énergie de seuil ;
- à déterminer de façon répétitive (122) l'énergie des particules diffusées élastiquement et inélastiquement ;
- à visualiser (128) les résultats obtenus par lesdites opérations (127).

**12.** Procédé selon la revendication 10, caractérisé en ce qu'il comprend en outre les étapes consistant :

- à réaliser une opération d'initialisation supplémentaire (130) ;
- à introduire (131) des données d'entrée comprenant: le type de particules, la combinaison de noyaux cible ainsi que le niveau d'énergie des noyaux de masse élevée, l'énergie maximale des particules incidente ;
- à déterminer (132) la valeur des variables $E_r$ et $P_r$ pour lesquelles s'appliquent les équations b) et c) ci-dessus ;
- déterminer (133) l'angle de croisement $\theta_c$ à partir des variables obtenues par ladite détermination (132) ;
- à visualiser les résultats (134).

FIG. 1

FIG.2

FIG. 3

FIG. 4

FIG. 5

FIG. 6

130

131

132

133

134